# EUROPEAN PATENT SPECIFICATION

(11) **EP 2 334 062 B1**
(45) Date of publication and mention of the grant of the patent: **15.04.2015**
(21) Application number: 10194597.0
(22) Date of filing: 10.12.2010
(51) Int. Cl.: H04N 21/466, H04N 21/482

(54) **Method of and device for displaying formatted television programme guide data**
Verfahren und Vorrichtung zur Anzeige formattierter Fernseh-Programm-Führer Daten.
Méthode et dispositif pour afficher des données formatèes d'un guide de programme de télévision

(30) Priority: 11.12.2009 NL 2003947
(43) Date of publication of application: 15.06.2011
(73) Proprietor: Stoneroos Holding B.V., 1217 GP Hilversum (NL)
(72) Inventor: Vis, Sander Joost, 1217GP, Hilversum (NL); Dijk van, Erik, 1217GP, Hilversum (NL); Kaptein van, Annelies Josephine, 1217GP, Hilversum (NL)
(74) Representative: Algemeen Octrooi- en Merkenbureau B.V.

(56) References cited:
- WO-A1-00/40017
- WO-A1-00/59214
- WO-A1-01/74065
- WO-A1-02/01871
- US-A1- 2003 149 981
- US-A1- 2004 233 238
- US-A1- 2006 150 103
- US-A1- 2009 199 241

## Description

### FIELD OF THE INVENTION

The invention relates to the field of providing formatted television programme data to a display.

### BACKGROUND OF THE INVENTION

Television programme data, also known as electronic programme guides, are available to users for browsing through data of television programmes that are available for one or more television channels. The television programme data is provided in the order at which television channels are programmed in for example a set top box that receives the various channels. The programmes are usually represented in a grid, in which the duration of a television programme is represented as the length of a bar in a column or a row of the grid. This is disclosed in international patent application WO 2009/139625 A2.

US 2003/0149981 discloses a method for operating a set top box, comprising providing a plurality of programme guide preferences to an an electronic programme guide or EPG provider, receiving an EPG application pogramme configured according to preferences provided to the EPG provider; storing the EPG application, receiving a programming information data structure configured to EPG preferences and rendering a portion of the programme listing information using the EPG application programme.

US 2006/0150130 discloses an EPG. Channels are sorted in vertical order, with programmes depicted as fields on a screen being ordered in horizontal order per channel. The edge of a field having text for identifying a programme is bolded to depict the programme being highlighted as a result of user interaction such as scrolling through the programme grid.

### OBJECT AND SUMMARY OF THE INVENTION

It is preferred to provide the formatted television programme guide data in a way that is more convenient to a user.

The invention provides in a first aspect a method of displaying formatted television programme guide data on a display. The method comprises receiving a command for displaying formatted television programme guide data; determining a first television channel, retrieving a first list of programmes comprised by the first television channel, determining at least a second television channel based on pre-determined criteria and retrieving a second list of programmes comprised by the second television channel. The method further comprises determining a current focus programme comprised by either the first list or the second list based on pre-determined criteria, the list comprising the current focus programme being the current focus list; and displaying the current focus list wherein data on the current focus programme is emphasised. The method also comprises determining a suggested focus programme comprised by a list out of the first and the second list that does not comprise the current focus programme based on pre-determined criteria, said list comprising the suggested focus programme being the suggested focus list; and displaying the suggested focus list, where data on the suggested focus programme is spatially aligned with data on the current focus programme.

By providing a suggested focus programme, which is a suggestion to the user for focus, and aligning data on the suggested focus programme, the user is provided with information in a more convenient way. The various pre-determined criteria for determining the second television channel, the current focus programme and the suggested focus programme can be either pre-set or set by the user. In that way, information can be provided to a user in a way that meets preferences of the user.

An embodiment of the method according to the invention comprises receiving user navigation input selecting data on a further programme from the first list or the second list, said further programme being other than the focus programme; set the further programme as the current focus programme and repeat f) through h) of claim 1.

By enabling the user to update the current focus programme, further suggested focus programmes are provided. In this way, the user can be provided with optimal proposals for watching a preferred programme either at the moment the command for showing the electronic programme guide is received or at a later moment.

In a further embodiment of the method according to the invention, the second television channel is determined based on at least one of the following criteria: an order in which television channels are programmed; the second television channel comprises at or near the moment the command is received a second television programme that matches user preferences; or the second television channel comprises at or near the moment the command is received a second television programme that is similar to a first television programme comprised by the first television channel at the moment the command is received.

In this way, the user is always provided with data on television programmes of which the odds are high that the user will appreciate those television programmes and will select at least one of them for watching.

In yet another embodiment of the method according to the invention, the current focus programme is determined based on at least one of the following criteria: the current focus programme is a programme being displayed on the display at the moment the command has been received; or the current focus programme matches user preferences.

In this way, the user does not have to navigate very far to select a television programme that the user may like.

In yet a further embodiment of the method according to the invention, the suggested focus programme is determined based on at least one of the following criteria: the suggested focus programme is comprised by the television channel not comprising the current focus programme at or near the moment the command is received; a similarity relation between the current focus programme and the suggested focus programme; or the suggested focus programme matches user preferences.

In this way, the user does not have to navigate very far to select a television programme that the user may like.

The invention provides in a second aspect a device for providing formatted television programme guide data to a display. The device comprises a data communication port for receiving television programme guide data, a display port for connecting the apparatus device to a display for displaying formatted television programme guide data on the display, a user communication unit; and a processing unit. The processing unit is arranged to receive a command for displaying formatted television programme guide data, determine a first television channel, retrieve a first list of programmes comprised by the first television channel, determine at least a second television channel based on pre-determined criteria, retrieve a second list of programmes comprised by the second television channel, determine a current focus programme comprised by either the first list or the second list based on pre-determined criteria, the list comprising the current focus programme being the current focus list; and display the current focus list wherein data on the current focus programme is emphasised. The processing unit is also arranged to determine a suggested focus programme comprised by a list out of the first and the second list that does not comprise the current focus programme based on pre-determined criteria, said list comprising the suggested focus programme being the suggested focus list; and display the suggested focus list, where data on the suggested focus programme is spatially aligned with data on the current focus programme.

The invention provides in a third aspect a computer programme product comprising computer executable code for programming a processing unit to enable the processing unit to perform the method according to claim 1.

### BRIEF DESCRIPTION OF THE DRAWINGS

The invention and embodiments thereof will now be further elucidated by means of Figures. In the Figures,
- Figure 1: shows an embodiment of the device according to the invention;
- Figure 2 A: shows a first screenshot of an electronic programme guide;
- Figure 2 B: shows a second screenshot of an electronic programme guide; and
- Figure 2 C: shows a third screenshot of an electronic programme guide.

### DESCRIPTION OF PREFERRED EMBODIMENTS

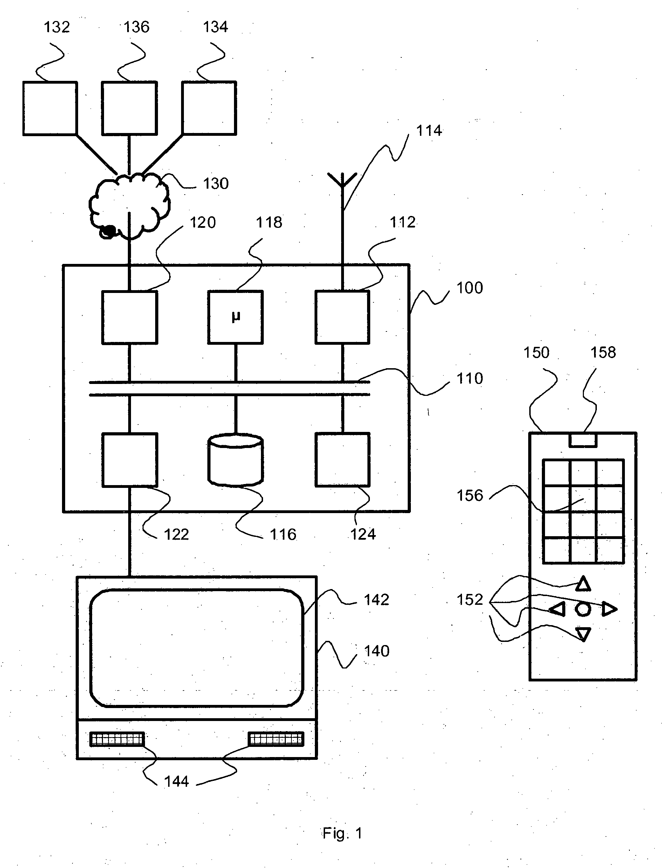

Figure 1 shows a set top box 100 as an embodiment of the device according to the invention. Figure 1 further shows an antenna 114 connected to the set top box 100, a network 130 to which the set top box 100, a profile server 132, a programme guide server 134 and a metadata server 136 are connected and a television 140 having a display 142 and speakers 144. In addition, Figure 1 shows a remote control unit 150 for controlling the set top box 100.

The set top box 100 comprises an internal communication bus 110 for facilitating communication between the various other components of the set top box 100, a microprocessor 118 as a processing unit, a television receiver unit 112 to which an antenna 114 is connected for receiving television programmes comprised by one or more television channels or other audiovisual data, a data communication unit 120 for sending and receiving data from the profile server 132 and the programme guide server 134.

The set top box 100 further comprises a data rendering unit 122 with a display communication port for rendering data received by the television receiver unit 112 or the data communication unit 120, either unprocessed or processed by the microprocessor 118. The processing performed by the microprocessor 118 can be encryption, specific formatting and in particular in case of audiovisual data image enhancement, sound processing, other processing and/or a combination thereof.

The set top box 100 also comprises a mass storage memory 116 as storage unit for storing software - computer executable code - for programming the microprocessor 118 to execute any methods that will be presented in the course of this description, any data received by the television receiver unit 112 and/or the data communication unit 120 and any other data received by the set top box 100. In another embodiment, the components of the set top box 100 are comprised by the television 140 or another device.

For properly controlling and instructing the set top box 100, the set top box 100 comprises an infrared set top box transceiver 124 for communicating with the remote control 150. This enables the set top box 100 to be controlled by means of the remote control 150. For this purpose, the remote control 150 comprises in this embodiment with navigation buttons 152, a confirmation button 154, numerical buttons 156 and an infrared remote control transceiver 158 for transmitting commands received by means of the buttons to the infrared set top box transceiver 124 of the set top box 100. In this embodiment, the remote control 150 is a dedicated device. Other embodiments can be envisaged in which a device like a smartphone is programmed to provide similar functionality.

The set top box 100 is arranged to provide the television 140 with audiovisual data in a format that the television 140 is able to present on the display 142 and the speakers 144. In this embodiment, audiovisual data is received by the television receiver unit 112 via the antenna 114 that is enabled to pick up electromagnetic waves carrying audiovisual data from the air. Alternatively, audiovisual data is retrieved via a cable network, including, but not limited to ADSL, a satellite network, other protocols or systems or a combination thereof. A person skilled in the art will appreciate that the television receiver unit 112 may in such cases have to be adapted to the method of receiving audiovisual data.

The audiovisual data received is subsequently processed for displaying on the display 142. The processing may include at least one of the following, down mixing to retrieve a baseband signal from a carrier frequency, decryption, decompression, digital-to-analogue conversion, image and sound enhancement, other or a combination thereof. The processing is performed by the microprocessor 118 and/or the data rendering unit 122. In another embodiment, some processing may also be performed by other components.

Typically, audiovisual data in a conventional television scenario is comprised by a television channel that is broadcast. The audiovisual data represents television programmes provided by one or more providers that are sequentially in time comprised by the television channel. It is noted that audiovisual data may also be received on command. The television receiver unit 112 is arranged to receive multiple television channels. Channels can be divided by being carried by different carrier frequencies and/or by being provided in multiple streams. A stream is in this scenario a sequence of digital and in particular binary data representing audiovisual data and possibly data of another type.

A selection of a television channel of which audiovisual data is to be reproduced by the television 140 can be selected by means of the numerical buttons 156 of the remote control 150. In this way, the set top box 100 is instructed to retrieve a specific television channel.

Preferably, television programmes have metadata associated with them. Metadata can be provided together with a signal or stream with the television programmes and/or can be provided separately by the metadata server 136. In the first case, metadata can be provided multiplexed with audiovisual data comprised by a channel. Metadata can be provided in accordance with the TV Anytime standard, another standard defining television programme metadata or in another way. It is preferred to have one standard defining television programme metadata for at least most of the television channels.

Metadata received together with the television programmes can also be enriched with information on the television programmes which information is retrieved from other sources, in particular publically accessible databases that are accessible through the internet. Such source may be publically available databases with information on films. In this embodiment, the metadata server 136 is a film database server and TV Anytime metadata is provided via the television channels, where the TV Anytime metadata is multiplexed with the audiovisual data comprised by the television channel.

With TV Anytime, a television programme can be for example be classified as an action film or a news item. Film database data provides for example information on actors and a first release date of a film. Channels can also be classified in certain groups. So for television programmes, attributes can be collected from television programme metadata and other sources that provide information on television programmes. It is noted that also the broadcast time of a television programme is an attribute of a television programme.

By means of these attributes, similarities between television programmes can be determined using a dedicated algorithm. In a first example, films with the same actor or actors are considered to be similar by the algorithm. In a second example, television programmes classified as news items are considered similar. In a third example, combining this information on television programmes being news items with information on the country of origin of a television channel, only television programmes that are news items and carried by a Dutch channel are considered to be similar. A person skilled in the art will appreciate that these examples are not limiting and are provided merely to indicate a vast amount of possible algorithms to determine similarity between two or more television programmes.

A user of the set top box selects various television programmes for watching over a certain period of time, usually because the user likes to watch those programmes. Additionally or alternatively, the user provides certain ratings indicating how much the user likes certain television programmes, for example by providing a rating between 1 and 10. These ratings can be coupled to one single specific television programme. Alternatively or additionally, the ratings are coupled to a specific type of television programmes, like wildlife documentaries, to a certain actor appearing in films or to a specific television channel. So a user profile indicating user preferences can be established automatically by collecting how often a television programme is watched, manually by collecting user ratings or a combination of both. The user profile indicating a preference for a specific programme can be used for rating similar programmes.

The profile server 132 records selection of those preferred television programmes and in case the user has provided ratings for television programmes, the ratings are recorded as well. The profile server 132 is arranged to build a user profile for the user, using the information collected on programmes selected and attributes available for those selected television programmes selected and/or rated over the certain period of time. In this way, user preferences are collected and recorded for determining which television programmes match user preferences. In the case user preference for a certain programme is defined by a certain number between 1 and 10, a television programme can be determined to match the user profile if the number is more than 8.

The user profile comprises information on what type of programmes are preferred by the users, like news items from a certain country at a certain time or film from a certain time period with a specific actor, for example spaghetti westerns with Clint Eastwood. Such spaghetti westerns or news items can be considered to be similar television programmes. The user profile can include preferences for specific programmes, specific types of programmes, specific channels, other or a combination thereof.

To facilitate a user selecting a certain television programme for watching, television channel operators, service providers and/or other entities provide programme guide information, in this embodiment via the programme guide server 134. Alternatively or additionally, programme guide information is provided together with the television channel, for example multiplexed with the audiovisual data comprised by the television channel. In the latter case, television programme guide data is received together with the audiovisual data and stored in the mass storage memory 116 for later use. Also in case the television programme guide data is to be retrieved from the programme guid server 134, the data can be pre-fetched and stored in the mass storage memory 116 for later use. Programme guide information typically comprises a list comprising titles of television programmes and start and/or end time. Additionally, further information may be provided like metadata on the television programmes.

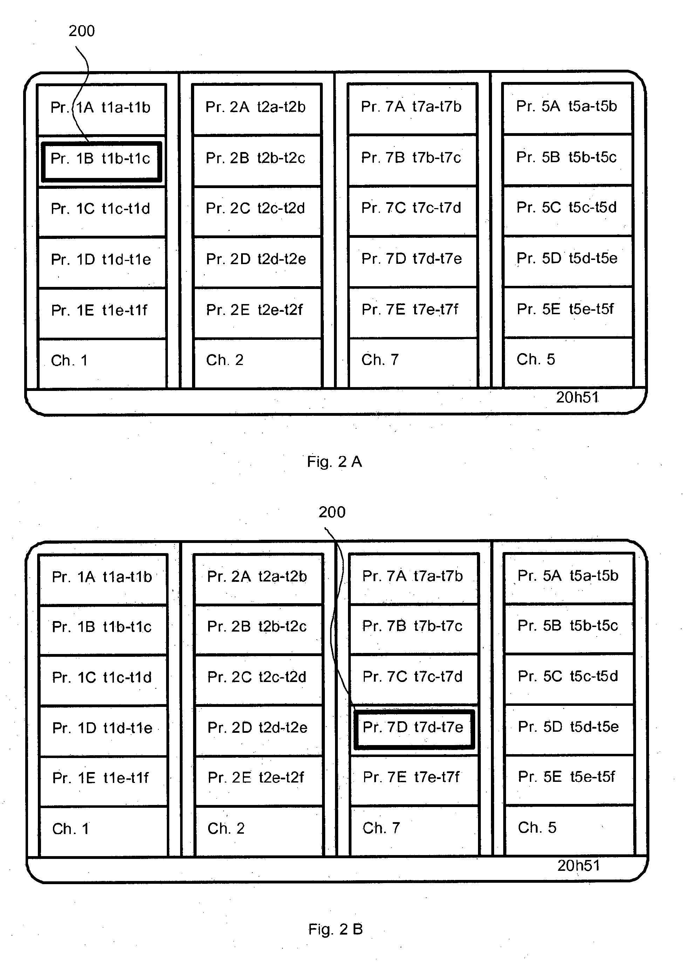

Figure 2A shows the television screen 142 in close up. The television screen 142 shows in this embodiment television programme guide information for four channels. Alternatively, television programme guide information of more or less channels is shown. The television screen 142 shows this data on command following an instruction of the remote control 150 to the set top box 100. This command results in the data communication unit 120 retrieving television programme guide information from the programme guide server 134 and/or the mass storage memory 116 following prior storage therein. Alternatively, television programme guide information is already available on the set top box 100 and stored in the mass storage memory 116 as indicated above.

In particular, television programme guide information for the channel showing at the moment the command from the remote 150 is retrieved. In addition, television programme information from other channels is retrieved, for example from the mass storage memory 116 or the programme guide server 134. The television channels of which television programme guide information is retrieved can be determined based on one or more pre-determined criteria. One criterion is that the television channels are programmed on the set top box 100 in a certain order. Another criterion is that at the moment the "show television programme guide information" command is received by the set top box 100, a certain channel comprises a television programme that is determined to be similar to the television programme currently provided by the selected channel and displayed on the display 142. As indicated above, such similarity can be determined on comparing attributes of television programmes. A further criterion is that at the moment the "show television programme guide information" command is received by the set top box 100, a certain channel comprises a television programme that is most preferred by the user based on the user profile.

Next, at least one channel and preferably three channels with programmes satisfying pre-determined criteria are selected. The television programme guide information retrieved is subsequently formatted for displaying by the television 140 on the display 142. The formatting is done by the microprocessor 118 and/or the data rendering unit 122. Alternatively, the formatting is performed by a dedicated unit of the set top box 100.

Figure 2A shows how the television programme guide information for four channels is in this embodiment displayed by the display 142. The four channels are indicated as Channel 1, Channel 2, Channel 7 and Channel 5. Of each channel, in this embodiment, the titles of television programmes are provided as Pr. 1A, Pr. 1B et cetera and the start and end time of each television programme are provided as data on each television programme. Additionally, a user rating of programmes, if available, can be displayed as well. In this embodiment, Channel 1 is the channel of which audiovisual data is shown on the display 142 at the moment the "show television programme guide information" command has been received. Alternatively, Channel 1 is a channel where a television programme is available at or near the moment the "show television programme guide information" command has been received.

In the television programme guide list for Channel 1, the television programme available at or near the moment the "show television programme guide information" command has been received is emphasised, providing focus to this television programme. The emphasis may be provided in several ways: data on the focussed television programme is placed at a pre-determined position on the display (almost upper left), the data is provided in a different colour than data on other television programmes than the current focussed television programme, data on the focussed television programme is surrounded by an area in a colour different than areas surrounding other data displayed on the display 142 and/or data on the focussed television programme is surrounded by a frame, preferably having a colour contrasting with the background. In Figure 2A, the emphasis is established by providing a frame 200 around television programme data on Pr. 1 B.

Right of the television programme guide list for Channel 1, the television programme guide lists for Channel 2, Channel 7 and Channel 5 are provided. In each item of the television programme lists, titles of television programmes and start and end time of the respective programmes are provided. The lists are vertically oriented and aligned such that directly right from the data on the focussed television programme is spatially and in this case horizontally aligned with other programmes from Channel 2, Channel 7 and Channel 5 that are available on those channels at the moment the "show television programme guide information" command has been received; in this case nine minutes to nine. This is done to suggest those other programmes to the user of the set top box 100, in particular as Channel 2, Channel 7 and Channel 5 have been selected based on user preferences. Therefore, the television programmes of which television programme guide data is aligned with data on television programme Pr. 1 B can be considered as suggested television programmes for focus.

In other embodiments, programmes satisfying other criteria are aligned with the focussed programme, which is in this case Pr. 1B. For example, television programme guide information on programmes that are similar to Pr. 1 B are horizontally aligned with the data on television programme Pr. 1 B., where similarity may be determined based on criteria already discussed. Alternatively or additionally, data on programmes that match criteria from the user profile stored on profile server 132 is aligned with data on television programme Pr. 1 B.

It is noted that in case suggested television programmes are primarily selected on criteria other than the moment at which they are available, the time at which they are available is preferred to be taken into account as an attribute. A suggested television programme that is available nine hours away from the moment at which the "show television programme guide information" command has been received is not very likely to be selected at that moment. A person skilled in the art will appreciate that in video-on-demand situation, this could be different, though.

With the navigation buttons 152 of the remote control 150, the user is enabled to selected data on a certain television programme by browsing through the various lists with television programme guide information. In Figure 2B, the user has selected data on television programme Pr. 7D of Channel 7. Selection of the data on television programme Pr. 7D can be by moving the emphasis - in this case the frame 200 - to television programme data on Pr. 7D.

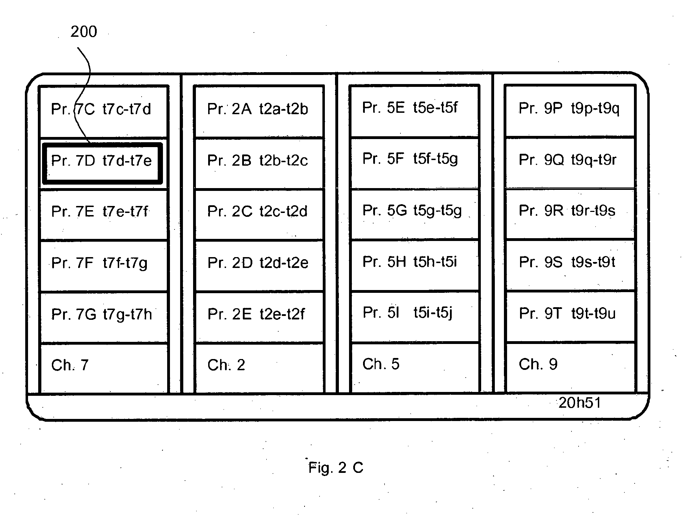

Upon moving the frame, possibly followed by a certain time of inactiveness, the lists with television programme guide information are reordered. This is in this scenario done by setting television programme Pr. 7D as the focussed programme and to follow the steps as discussed before to arrive at a situation of which Figure 2C shows a screenshot:
□ Determine channels in addition to Channel 7 of which television programme guide information is to be shown, based on pre-determined criteria discussed before. In this case, those television channels are Channel 2 and Channel 5 of which data had already been retrieved. In addition to that, television programme guide information is retrieved for Channel 9 which is most preferred by the user after Channel 2, Channel 7 and Channel 5.
□ In case required, retrieve any addition television programme guide information. In this case, that is television programme guide information for Channel 9.
□ Assess information in the television programme guide information retrieved to find television programmes that are best related to television programme Pr. 7D, based on pre-determined criteria discussed before. In this case, television programmes Pr. 2B, Pr. 5F and Pr. 9Q are considered to be best suggestions where the user focuses on Pr. 7D.
□ Format the television programme guide information in vertically oriented lists (or horizontally oriented in another embodiment), where data on further suggested television programmes is aligned with data on the focussed television programme. So data on television programmes Pr. 2B, Pr. 5F and Pr. 9Q is horizontally aligned with data on television programme Pr. 7D. The rest of the lists is chronologically ordered.
□ Provide the formatted television programme guide to the television 140 for displaying on the display 142 via the data rendering unit 122 with the display communication port.
□ Display the formatted television programme guide for the four channels.

Having selected data of a certain television programme, the television programme can be selected to retrieve additional information on the television programme and/or the television programme may be selected for watching.

Browsing through data on programmes shown on the display 142 may take certain time, in particular in case the user does not exactly know what he or she is looking for. However, during browsing, the user may still want to see at least certain parts of a television programme currently showing on the television 140. Therefore, the television programme guide information displayed on the display 142 is presented with a transparent or semi-transparent background.

In one particular embodiment, the lists on the left side of the screen are shown with the least transparent background and the lists on the right side of the screen are shown with the most transparent background. For example, considering Figure 2C, the transparency on the left side, for the list for Channel 7 is shown with a background with 20% transparency and the list for Channel 9 is shown with a background with 80% transparency. Transparency increased proportionally staggered from left to right.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa. When data is being referred to as audiovisual data, it can represent audio only, video only or still pictures only or a combination thereof, unless specifically indicated otherwise in the description of the embodiments.

In the description above, it will be understood that when an element such as layer, region or substrate is referred to as being "on", "onto" or "connected to" another element, the element is either directly on or connected to the other element, or intervening elements may also be present.

Furthermore, the invention may also be embodied with less components than provided in the embodiments described here, wherein one component carries out multiple functions. Just as well may the invention be embodied using more elements than depicted in Figure 1, wherein functions carried out by one component in the embodiment provided are distributed over multiple components.

A person skilled in the art will readily appreciate that various parameters disclosed in the description may be modified and that various embodiments disclosed and/or claimed may be combined without departing from the scope of the invention.

It is stipulated that the reference signs in the claims do not limit the scope of the claims, but are merely inserted to enhance the legibility of the claims.

In summary, the invention relates to a method and device for presenting an electronic programme guide. In an embodiment, television programme information is displayed in vertical lists, with programmes of the channel tuned in to on the left. Data on the programme currently displayed is emphasised. Information on other channels is provided in a vertical list, with programmes currently provided by other channels horizontally aligned with data of the programme currently selected. The other channels may be selected for showing programme information because programmes currently playing on the other channels are preferred by the user or related to the programme currently showing. A user can browse through the programme data and select a programme, setting that programme as emphasised programme. Next, information on channels with programmes related to the emphasised programme is shown. The invention may be embodied in a set top box, television or other.

## Claims

1. Method of displaying formatted television programme guide data on a display, the method comprising:
a) Receive a command for displaying formatted television programme guide data;
b) Determine a first television channel (Ch. 1);
c) Retrieve a first list of programmes (Pr. 1 A, Pr. 1 B, Pr. 1C, Pr. 1D, Pr. 1E) comprised by the first television channel;
d) Determine at least a second television channel (Ch. 7) based on first pre-determined criteria;
e) Retrieve a second list of programmes (Pr. 2A, Pr. 2B, Pr. 2 C, Pr. 2D, Pr. 2E) comprised by the second television channel;
f) Determine a current focus programme (Pr. 1 B) comprised by either the first list or the second list based on second pre-determined criteria, the list comprising the current focus programme being the current focus list; and
g) Display the current focus list wherein data on the current focus programme is emphasised;
**characterised in that** the method further comprises:
h) Determine a suggested focus programme (Pr. 7D) comprised by a list out of the first and the second list that does not comprise the current focus programme based on third pre-determined criteria, said list comprising the suggested focus programme being the suggested focus list; and
i) Display the suggested focus list, where data on the suggested focus programme is spatially aligned with data on the current focus programme.

2. Method as claimed in claim 1, further comprising:
a) Receiving user navigation input selecting data on a further programme from the first list or the second list, said further programme being other than the focus programme;
b) Set the further programme as the current focus programme and repeat g through i) of claim 1.

3. Method as claimed in claim 1, wherein the second television channel (Ch. 7) is determined based on at least one of the following criteria:
a) An order in which television channels are programmed;
b) The second television channel comprises at or near the moment the command is received a second television programme (Pr. 7D) that matches user preferences; or
c) the second television channel comprises at or near the moment the command is received a second television programme (Pr. 7D) that is similar to a first television programme comprised by the first television channel at the moment the command is received.

4. Method as claimed in claim 1, wherein the current focus programme (Pr. 1 B) is determined based on at least one of the following criteria:
a) The current focus programme is a programme being displayed on the display at the moment the command has been received; or
b) The current focus programme matches user preferences.

5. Method as claimed in claim 1, wherein the suggested focus programme (Pr. 7D) is determined based on at least one of the following criteria:
a) The suggested focus programme is comprised by the television channel (Ch. 7) not comprising the current focus programme (Pr. 1D) at or near the moment the command is received;
b) A similarity relation between the current focus programme and the suggested focus programme; or
c) The suggested focus programme matches user preferences.

6. Method as claimed in claim I , wherein
a) The current focus list is formatted as a vertically oriented list and displayed at the left side of the display (142); and
b) The suggested focus list is formatted as a vertically oriented list and displayed at the right side of the current focus list.

7. Method as claimed in claim 1, wherein data on the current focus programme (Pr. 1D) is emphasised in at least one of the following ways:
a) Providing data on the current focus programme for display at a pre-determined position on the display (142);
b) Providing data on the current focus programme for display in a different colour than data on other programmes than the current focus programme;
c) Providing data on the current focus programme surrounded by an area (200) in a first colour different from a second colour of areas surrounding data on programmes other than the current focus programme.

8. Method as claimed in claim 1, wherein the current focus list and the suggested focus list are displayed with a semi-transparent background.

9. Method as claimed in claim 8, wherein the current focus list is displayed with a background having 20% transparency and the suggested focus list is displayed with a background having 40% transparency.

10. Method as claimed in claim 1, wherein data on programmes (Pr. 1B, Pr. 7D) that follow the focus programme are spatially aligned with programmes that follow the suggested focus programme.

11. Device (100) for providing formatted television programme guide data to a display, comprising:
a) A data communication port (120) for receiving television programme guide data;
b) A display port (122) for connecting the device to a display (140, 142) for displaying formatted television programme guide data on the display;
c) A user communication unit (124); and
d) A processing unit (118) arranged to:
i) Receive a command for displaying formatted television programme guide data;
ii) Determine a first television channel (Ch. 1);
iii) Retrieve a first list of programmes comprised by the first television channel;
iv) Determine at least a second television channel (Ch. 7) based on first pre-determined criteria;
v) Retrieve a second list of programmes comprised by the second television channel;
vi) Determine a current focus programme (Pr. 1B) comprised by either the first list or the second list based on second pre-determined criteria, the list comprising the current focus programme being the current focus list; and
vii) Display the current focus list wherein data on the current focus programme is emphasised;
**characterised in that** the processing unit is further arranged to:
viii) Determine a suggested focus programme (Pr. 7D) comprised by a list out of the first and the second list that does not comprise the current focus programme based on third pre-determined criteria, said list comprising the suggested focus programme being the suggested focus list; and
ix) Display the suggested focus list, where data on the suggested focus programme is spatially aligned with data on the current focus programme.

12. Computer programme product (116) comprising computer executable code for programming a processing unit to enable the processing unit to perform the method according to claim 1.

## Patentansprüche

1. Verfahren zur Anzeige von formatierten Fernseh-Programmführer-Daten auf einem Display, welches beinhaltet:
a) Empfang eines Befehls für die Anzeige von formatierten Fernseh-Programmführer-Daten;
b) Bestimmung eines ersten Fernseh-Kanals (Kanal 1);
c) Abruf einer ersten Liste von Programmen (Pr. 1 A, Pr. 1B, Pr. 1C, Pr. 1D, Pr. 1 E), die im ersten Fernseh-Kanal enthalten sind;
d) Bestimmung zumindest eines zweiten Fernseh-Kanals (Kanal 7) auf der Basis von ersten vorbestimmten Kriterien;
c) Abruf einer zweiten Liste von Programmen (Pr. 2A, Pr. 2B, 2C, Pr. 2D, Pr. 2E), die im zweiten Fernseh-Kanal enthalten sind;
f) Bestimmung eines laufenden Fokus-Programms (Pr. 1 B), das entweder von der ersten oder von der zweiten Liste auf der Basis von zweiten vorbestimmten Kriterien zusammengesetzt ist, wobei es sich bei der Liste, die das laufende Fokus-Programm beinhaltet, um die laufende Fokus-Liste handelt, und
g) Anzeige der laufenden Fokus-Liste, in der Daten über das laufende Fokus-Programm hervorgehoben werden;
**dadurch gekennzeichnet, dass** das Verfahren weiterhin aufweist:
h) Bestimmung eines vorgeschlagenen Fokus-Programms (Pr. 7D), zusammengesetzt von einer Liste aus der ersten und der zweiten Liste, in der nicht das laufende Fokus-Programm enthalten ist, auf der Basis von dritten vorbestimmten Kriterien, wobei die genannte Liste das vorgeschlagene Fokus-Programm enthält, bei dem es sich um die vorgeschlagene Fokus-Liste handelt, und
i) Anzeige der vorgeschlagenen Fokus-Liste, wobei Daten über das vorgeschlagene Fokus-Programm räumlich mit Daten über das laufende Fokus-Programm auf eine Linie gebracht werden.

2. Verfahren entsprechend Anspruch 1, welches weiterhin beinhaltet:
a) Empfang einer Benutzernavigationseingabe, die Daten über ein weiteres Programm von der ersten oder der zweiten Liste auswählt, wobei das genannte weitere Programm ein anderes als das Fokus-Programm ist;
b) Einstellung des weiteren Programms als laufendes Fokus-Programm und Wiederholung von Schritt g bis einschließlich i) von Anspruch 1.

3. Verfahren entsprechend Anspruch 1, wobei der zweite Fernseh-Kanal (Kanal 7) bestimmt wird auf der Basis von mindestens einem der folgenden Kriterien:
a) Einer Reihenfolge, in der die Fernseh-Kanäle programmiert sind;
b) Der zweite Fernseh-Kanal beinhaltet zu dem Zeitpunkt bzw. nahe zu dem Zeitpunkt, zu dem der Befehl empfangen wird, ein zweites Fernseh-Programm (Pr. 7D), das auf die Benutzer-Vorlieben abgestimmt ist; oder
c) der zweite Fernseh-Kanal beinhaltet zu dem Zeitpunkt bzw. nahe zu dem Zeitpunkt, zu dem der Befehl empfangen wird, ein zweites Fernseh-Programm (Pr. 7D), das einem ersten Fernseh-Programm ähnelt, das in dem ersten Fernseh-Kanal zu dem Zeitpunkt, zu dem der Befehl empfangen wird, enthalten ist.

4. Ein Verfahren entsprechend Anspruch 1, wobei das laufende Fokus-Programm (Pr. 1 B) bestimmt wird auf der Basis von mindestens einem der folgenden Kriterien:
a) Bei dem laufenden Fokus-Programm handelt es sich um ein Programm, das zum Zeitpunkt, zu dem der Befehl empfangen wird, gerade auf dem Display angezeigt wird; oder
b) das laufende Fokus-Programm ist auf die Benutzer-Vorlieben abgestimmt.

5. Ein Verfahren entsprechend Anspruch 1, wobei das vorgeschlagene Fokus-Programm (Pr. 7D) bestimmt wird auf der Basis von mindestens einem der folgenden Kriterien:
a) Das vorgeschlagene Fokus-Programm ist enthalten in dem Fernseh-Kanal (Kanal 7), der das laufende Fokus-Programm (Pr. 1D) zu dem Zeitpunkt bzw. nahe zu dem Zeitpunkt, zu dem der Befehl empfangen wird, nicht enthält,
b) eine Beziehung der Ähnlichkeit zwischen dem laufenden Fokus-Programm und dem vorgeschlagenen Fokus-Programm; oder
c) das vorgeschlagene Fokus-Programm ist auf die Benutzer-Vorlieben abgestimmt.

6. Verfahren entsprechend Anspruch 1, wobei:
a) die laufende Fokus-Liste als senkrecht ausgerichtete Liste formatiert ist und angezeigt wird an der linken Seite des Displays (142); und
b) die vorgeschlagene Fokus-Liste formatiert ist als senkrecht ausgerichtete Liste und angezeigt wird an der rechten Seite der laufenden Fokus-Liste.

7. Ein Verfahren entsprechend Anspruch 1, wobei Daten über das laufende Fokus-Programm (Pr. 1D) in mindestens einer der folgenden Weisen hervorgehoben werden:
a) Bereitstellung von Daten über das laufende Fokus-Programm für die Anzeige an einer vorbestimmten Position auf dem Display (142);
b) Bereitstellung von Daten über das laufende Fokus-Programm zur Anzeige in einer anderen Farbe als Daten über andere Programme als das laufende Fokus-Programm;
c) Bereitstellung von Daten über das laufende Fokus-Programm, umgeben von einem Bereich (200) in einer ersten Farbe, unterschiedlich von einer zweiten Farbe von Bereichen, welche Daten über andere Programme als das laufende Fokus-Programm umgeben.

8. Verfahren entsprechend Anspruch 1, wobei die laufende Fokus-Liste und die vorgeschlagene Fokus-Liste mit einem halbtransparenten Hintergrund angezeigt werden.

9. Verfahren entsprechend Anspruch 8, wobei die laufende Fokus-Liste angezeigt wird mit einem Hintergrund, der eine Transparenz von 20 % aufweist, und die vorgeschlagene Fokus-Liste angezeigt wird mit einem Hintergrund, der eine Transparenz von 40 % aufweist.

10. Verfahren entsprechend Anspruch 1, wobei Daten über die Programme (Pr. 1B, Pr. 7D), die auf das Fokus-Programm folgen, räumlich in eine Linie gebracht werden mit Programmen, die auf das vorgeschlagene Fokus-Programm folgen.

11. Gerät (100) zur Bereitstellung von formatierten Fernseh-Programmführer-Daten auf einer Anzeige, welches sich erstreckt auf:
a) eine Daten-Kommunikationsschnittstelle (120) für den Empfang von Fernseh-Programmführer-Daten;
b) Ein Display-Schnittstelle (122) für den Anschluss des Geräts an ein Display (140, 142) für die Anzeige von formatierten Fernseh-Programmführer-Daten auf der Anzeige;
c) Eine Benutzer-Kommunikationseinheit (124); und
d) Eine Verarbeitungseinheit (118), die dazu eingerichtet ist,:
i) einen Befehl für die Anzeige von formatierten Fernseh-Programmführer-Daten zu empfangen;
ii) einen ersten Fernseh-Kanal zu bestimmen (Kanal 1);
iii) eine erste Liste von Programmen abzurufen, die in dem ersten Fernseh-Kanal enthalten sind;
iv) zumindest einen zweiten Fernseh-Kanal (Kanal 7) auf der Basis von ersten vorbestimmten Kriterien zu bestimmen;
v) eine zweite Liste von Programmen abzurufen, die in dem zweiten Fernseh-Kanal enthalten sind;
vi) eine laufende Fokus-Sendung (Pr. 1 B), zu bestimmen, die enthalten ist von entweder der ersten oder der zweiten Liste auf der Basis von zweiten vorbestimmten Kriterien, wobei es sich bei der Liste, die das laufende Fokus-Programm beinhaltet, um die laufende Fokus-Liste handelt, und
vii) die laufende Fokus-Liste anzuzeigen, in der Daten über das laufende Fokus-Programm hervorgehoben werden;
**dadurch gekennzeichnet, dass** die Verarbeitungseinheit weiterhin dazu eingerichtet ist:
viii) ein vorgeschlagenes Fokus-Programm (Pr. 7D) zu bestimmen, zusammengesetzt von einer Liste aus der ersten und der zweiten Liste, in der nicht das laufende Fokusprogramm auf der Basis von dritten vorbestimmten Kriterien enthalten ist,
wobei die genannte Liste
das vorgeschlagene Fokus-Programm enthält, bei dem es sich um die vorgeschlagene Fokus-Liste handelt, und
ix) die vorgeschlagene Fokus-Liste anzuzeigen, wobei Daten über das vorgeschlagene Fokus-Programm räumlich mit Daten über das laufende Fokus-Programm in eine Linie gebracht werden.

12. Ein Computer-Software-Produkt (116), welches computerausführbaren Code für die Programmierung einer Verarbeitungseinheit enthält, um die Verarbeitungseinheit dazu in die Lage zu versetzen, das Verfahren entsprechend Anspruch1 durchzuführen.

## Revendications

1. Méthode d'affichage de données formatées de guide de programme de télévision sur un écran, la méthode comportant :
a) la réception d'une commande pour afficher les données formatées de guide de programme de télévision ;
b) la détermination d'une première chaîne de télévision (Ch. 1) ;
c) la récupération d'une première liste de programmes (Pr. 1A, Pr. 1 B, Pr. 1 C, Pr. 1D, Pr. 1 E) offerts par la première chaîne de télévision ;
d) la détermination d'une seconde chaîne de télévision au moins (Ch. 7) basée sur les premiers critères prédéfinis ;
e) la récupération d'une seconde liste de programmes (Pr. 2A, Pr.2B, Pr. 2 C, Pr. 2D, Pr. 2E) offerts par la seconde chaîne de télévision ;
f) la détermination du programme de focalisation actuel (Pr. 1 B) représenté par la première liste ou la seconde liste basée sur les seconds critères prédéfinis, la liste comprenant le programme de focalisation actuel étant la liste de focalisation actuelle ; et
g) l'affichage de la liste de focalisation actuelle au sein de laquelle les données du programme de focalisation actuel sont accentuées ;
**Caractérisée en ce que** la méthode comporte::
h) la détermination d'un programme de focalisation suggéré (Pr. 7D) représenté par une liste issue de la première et de la seconde liste qui ne contient pas le programme de focalisation actuel basé sur les troisièmes critères prédéfinis, ladite liste comprenant le programme de focalisation suggéré étant la liste de focalisation suggérée ; et
i) l'affichage de la liste de focalisation suggérée, au sein de laquelle les données concernant le programme de focalisation suggéré sont alignées par rapport aux données sur le programme de focalisation actuel.

2. La méthode conforme à la revendication 1 comprend de plus :
a) la réception de données de sélection de saisie pour la navigation utilisateur sur un programme supplémentaire issu de la première liste ou de la seconde liste, ledit programme supplémentaire se distinguant du programme de focalisation ;
b) la définition du programme supplémentaire comme étant le programme de focalisation et la répétition des étapes de g à i) de la revendication 1.

3. La méthode conforme à la revendication 1, où la seconde chaîne de télévision (Ch. 7) se détermine sur la base de l'un des critères suivants au moins :
a) un ordre de programmation des chaînes de télévision ;
b) la seconde chaîne de télévision comprend, (pratiquement) au moment de la réception de la commande, un second programme de télévision (Pr. 7D) correspondant aux préférences de l'utilisateur ; ou
c) la seconde chaîne de télévision comprend, (pratiquement) au moment de la réception de la commande, un second programme de télévision (Pr. 7D) semblable au premier programme de télévision offert par la première chaîne de télévision au moment de la réception de la commande.

4. La méthode conforme à la revendication 1, où le programme de focalisation actuel (Pr. 1 B) se détermine sur la base de l'un des critères suivants au moins :
a) Le programme de focalisation actuel est un programme affiché à l'écran au moment de la réception de la commande ; ou
b) Le programme de focalisation actuel correspond aux préférences de l'utilisateur.

5. La méthode conforme à la revendication 1, où le programme de focalisation suggéré (Pr. 7D) se détermine sur la base de l'un des critères suivants au moins :
a) le programme de focalisation suggéré est comprise par la chaîne de télévision (Ch. 7) qui ne comprend pas le programme de focalisation actuel (Pr. 1D) (pratiquement) au moment de la réception de la commande ;
b) il existe une relation de similitude entre le programme de focalisation actuel et le programme de focalisation suggéré ; ou
c) le programme de focalisation suggéré correspond aux préférences de l'utilisateur.

6. La méthode conforme à la revendication 1, où
a) La liste de focalisation actuelle est formatée comme une liste orientée verticalement et affichée sur le côté gauche de l'écran (142) ; et
b) la liste de focalisation suggérée est formatée comme une liste orientée verticalement et affichée à droite de la liste de focalisation actuelle.

7. La méthode conforme à la revendication 1, où les données concernant le programme de focalisation actuel (Pr. 1D) sont accentuées de l'une des façons suivantes au moins :
a) par l'apport de données concernant le programme de focalisation actuel en vue de leur affichage à un endroit prédéfini de l'écran (142) ;
b) par l'apport de données concernant le programme de focalisation en vue de leur affichage d'une couleur différente de celle des données concernant d'autres programmes que le programme de focalisation actuel ;
c) par l'apport de données concernant le programme de focalisation entouré d'une zone (200) d'une première couleur différente d'une seconde couleur de zones entourant les données sur les programmes autres que le programme de focalisation actuel.

8. La méthode conforme à la revendication 1, où la liste de focalisation actuelle et la liste de focalisation suggérée sont affichées avec un arrière-plan semi-transparent.

9. La méthode conforme à la revendication 8, où la liste de focalisation actuelle est affichée avec un fond d'écran ayant 20% de transparence et la liste de focalisation suggérée est affichée avec un fond d'écran ayant 40% de transparence.

10. La méthode conforme à la revendication 1, où les données sur les programmes (Pr. 1 B, Pr. 7D) qui suivent le programme de focalisation sont alignées par rapport aux programmes qui suivent le programme de focalisation suggéré.

11. Dispositif (100) destiné à fournir des données formatées de guide de programme de télévision à un écran, comprenant :
a) un port de transfert de données (120) pour la réception de données de guide de programme de télévision ;
b) un port d'affichage (122) pour connecter le périphérique à un écran (140, 142) en vue d'afficher les données formatées de guide de programme de télévision sur l'écran ;
c) une unité de communication d'utilisateur (124) ; et
d) une unité de traitement (118) c o n ç u e pour:
i) la réception d'une commande d'affichage de données formatées de guide de programme de télévision ;
ii) la détermination de la première chaîne de télévision (Ch.1) ;
iii) la récupération d'une première liste de programmes offerts par la première chaîne de télévision ;
iv) la détermination d'une seconde chaîne de télévision au moins (Ch. 7) basée sur les premiers critères prédéfinis ;
v) la récupération d'une seconde liste de programmes offerts par la seconde chaîne de télévision ;
vi) la détermination d'un programme de focalisation actuel (Pr. 1 B) figurant sur la première liste ou la seconde liste basée sur les seconds critères prédéfinis, la liste comprenant le programme de focalisation actuel étant la liste de focalisation actuelle ; et vii). l'affichage de la liste de focalisation actuelle au sein de laquelle les données sur le programme de focalisation actuel sont accentuées ;
**Caractérisé en ce que** l'unité de traitement est conçue en outre pour :
viii) déterminer un programme de focalisation suggéré (Pr. 7D) représenté par une liste issue de la première et de la seconde liste qui ne contient pas le programme de focalisation actuel basé sur les troisièmes critères prédéfinis, ladite liste qui comprend le programme de focalisation suggéré étant la liste de focalisation suggérée et
ix) afficher la liste de focalisation suggérée ; au sein de laquelle les données concernant le programme de focalisation suggéré sont alignées par rapport aux données sur le programme de focalisation actuel.

12. Logiciel (116) comprenant un code exécutable par ordinateur pour la programmation d'une unité de traitement permettant à l'unité de traitement de mettre en oeuvre la méthode conformément à la revendication 1.
